Europäisches Patentamt

European Patent Office

Office européen des brevets

(11) Publication number: **0 090 416**
**B1**

# EUROPEAN PATENT SPECIFICATION

(45) Date of publication of patent specification: **02.03.88**

(21) Application number: **83103127.3**

(22) Date of filing: **29.03.83**

(51) Int. Cl.⁴: **B 29 D 30/20**

(54) Process and apparatus for manufacturing pneumatic tires.

(30) Priority: **30.03.82 IT 2046782**

(43) Date of publication of application:
**05.10.83 Bulletin 83/40**

(45) Publication of the grant of the patent:
**02.03.88 Bulletin 88/09**

(84) Designated Contracting States:
**AT BE DE FR GB LU NL SE**

(56) References cited:
**EP-A-0 081 858**
**DE-B-1 729 767**
**GB-A-1 409 555**
**GB-A-2 046 679**
**US-A-4 134 783**

(73) Proprietor: **PIRELLI COORDINAMENTO PNEUMATICI Società per Azioni**
**Piazzale Cadorna, 5**
**I-20123 Milan (IT)**

(72) Inventor: **Caretta, Renato**
**Viale dei Tigli 16**
**Gallarate (Varese) (IT)**
Inventor: **Colombani, Bruno**
**Via Monterotondo 17**
**Milan (IT)**

(74) Representative: **Dr. Elisabeth Jung Dr. Jürgen Schirdewahn Dipl.-Ing. Claus Gernhardt**
**P.O. Box 40 14 68 Clemensstrasse 30**
**D-8000 München 40 (DE)**

Courier Press, Leamington Spa, England.

## Description

The present invention relates to a process and apparatus for manufacturing pneumatic tires and more particularly to those steps for manufacturing a pneumatic tire carried out subsequently to the formation of a carcass in cylindrical configuration.

As it is known, a carcass can be made on a single drum by arranging the various reinforcing plies in the form of a cylindrical sleeve, then applying the bead cores to the ends of the plies, consequently expanding the suitable seats provided on the drum to oblige the plies to abut around the bead cores, and at last expanding the central portion of the drum and drawing simultaneously the bead core seats toward one another to shape the carcass to toric form.

In a further step the ends of the plies are turned up on the sidewalls of the carcass and finally the annular reinforcing structure and the tread are applied.

This method can cause in some cases an unacceptable sliding of the plies around the bead cores during the step of torically shaping the carcass in consequence of the strong tensile stresses on the cords of the plies themselves determined by the high inflation pressure.

The main reason for the sliding is anyhow a certain bending stiffness of the carcass plies so that the plies themselves do not perfectly abut around the bead cores when the seats of the drum are expanded to determine the anchoring between plies and bead cores.

· A possible solution to remedy the cited drawback could be that of building-up separately the carcass using suitable means apt to faithfully conform the plies around the sides of the bead cores so as to realize a carcass tube to be than transported to an expandable drum to develop the tube from the cylindrical to the toric configuration. A respective solution is disclosed in EP—A—81 858 (prior art under the terms of Article 54(3) EPC), which describes a process for manufacturing pneumatic tires, comprising a carcass formed by one or more reinforcing plies, a pair of bead cores, a tread and an annular reinforcing structure between the carcass and the tread, said process including the steps of:

a) building-up carcass plies, in cylindrical configuration, around a first drum;

b) applying bead cores onto said plies, at a predetermined distance from the ends thereof, and arranging a portion of the plies around the inside of said bead cores but maintaining their ends projecting axially outwardly beyond the bead cores so as to form a carcass tube;

c) transferring said carcass tube around a second drum, which is devoid of a bladder, and which comprises radially expandable and axially movable bead supporting seats;

d) centering said carcass tube onto said second drum;

e) blocking the bead cores onto said seats;

f) torically shaping said carcass tube through inwardly directed axial movement of said supporting seats and

g) completing the carcass with the annular reinforcing structure and the tread.

However, even if at first view this solution seems to be immediately realizable, practically there is to be considered the arising of other various problems to be solved all at the same time.

Firstly there is to bear in mind the present inadequacy of the knwon expandable drums to receive a carcass tube having two sections of reduced diameter at a distance from the ends and in correspondence of the bead core zones.

In fact, no solution exists in respect of an automatic loading of a tube having variations in diameter comprising reductions of section.

On the other hand it is impossible to think of effecting a manual loading of such a tube around a drum of known type, since even admitting to be able to carry out this loading, the carcass would tend to get deformed in the zones of anchoring the plies to the bead cores altering the above cited faithful coupling and annulling thus the advantages of making a tube separately.

Thus, it is necessary to provide appropriate seats on the drum in order to clamp with the due pressure the already preconstituted annular blocks formed by the bead cores with the plies wound on the sides thereof.

The applicants aim to realize the proposed solution and therefore an object of the present invention is to provide a process and an apparatus for manufacturing pneumatic tires devoid of the above cited drawbacks.

According to the invention there is provided a process for manufacturing pneumatic tires, comprising a carcass formed by one or more reinforcing plies, a pair of bead cores, a tread and an annular reinforcing structure between the carcass and the tread, said process including the steps of:

a) building-up carcass plies, in cylindrical configuration around a first drum;

b) applying bead cores onto said plies, at a predetermined distance from the ends thereof, and arranging a portion of the plies around the inside of said bead cores but maintaining their ends projecting axially outwardly beyond the bead cores so as to form a carcass tube;

c) transferring by telescoping said carcass tube around a second drum, which is devoid of a bladder, and which comprises a first and second group of radially expandable and axially movable parts prearranged with an outer diameter that is smaller than the smallest inner diameter of said carcass tube, these first and second groups of expandable and axially movable parts forming bead supporting seats;

d) centering said carcass tube onto said second drum by applying direct forces in a radical sense from the tube inside toward the outside through the simultaneous expansion of said first expandable parts arranged symmetrically and in a central position with respect to the mid-circumferential plane perpendicualr to the axis of the second drum and pressing continuously inwardly the carcass tube by applying radial and stretching forces to the inner surface of the carcass tube in moving axially and continuously said first expandable parts always in contact with the carcass walls from the central position to a position in which the plies are clamped between the axially innermost sides of the bead cores and said first expandable parts;

e) bearing the ends of said carcass tube by applying radially directed forces to the tube from the inside towards the outside of the tube, through the simultaneous expansion of said second expandable parts of said second drum;

f) blocking the bead cores onto said seats by clamping the ply portions wound around the side of the bead cores with the first and second groups of expandable and axially movable parts generating axial forces opposing one another;

g) torically shaping said carcass tube through inwardly directed axial movement of said bead supporting seats, and

h) completing the carcass with the annular reinforcing structure and the tread.

Therefore, the essential steps of the process are those relating to the application of radial forces moved contemporaneously with a determined order from the center toward the zone of the carcass tube shaped around the bead cores and the final application of opposed axial forces to the plies shaped around the bead cores.

The first forces, applied practically through suitable expandable means of a drum, permit the support and the mechanical centering of the carcass tube with respect to the drum.

The cited second forces keep the plies closely anchored to the sides of the bead cores and avoid sliding of the cords during the toric configuration of the carcass.

A further object of the present invention is a drum for toric shaping of a tire carcass, arranged in the form of a cylindrical tube and comprising plies wound on both sides of a pair of bead cores, with their ends axially projecting outwardly beyond the cores, said drum comprising a shaft, along which are axially slidable and radially expandable a pair of bead supporting seats symmetrically arranged one to the other with respect to the central plane perpendicular to the axis of rotation of the drum, each seat being comprised by sectors applied around the shaft, said seats being radially movable starting from a cylindrical configuration determined by a diameter of a value lower than the smallest inner diameter of the carcass tube. Such a drum is known from DE—B—1729 767. According to the invention said drum is characterized in that each of said bead supporting seats comprises two groups of sectors, all said sectors being operatively grouped in a first pair of sectors and in a second pair of sectors, the groups of sectors of the first pair being axially movable one with respect to the other and with respect to the groups of the second pair, the groups of sectors of said second pair being applied around the shaft in an axial outer position with respect to the first pair, the contiguous group of sectors of the two pairs in consequence of their radial expansion against the wall of said tube and the axial approach of the sectors of the first pair towards the sectors of the second pair determining blocking means for the carcass plies in wound configuration around the sides of the bead cores, said blocking means being axially movable to each other.

The present invention will be better understood by the following detailed description made by way of non limiting example with reference to the figures of the accompanying sheets of drawing, in which:

Figure 1 shows in longitudinal view a tire carcass in the form of a tube supported by a suitable apparatus;

Figure 2 shows in a sketch a block diagram relating to the apparatus according to the invention;

Figure 3 shows schematically in transversal section a drum for generating the toric configuration of a carcass;

Figure 4 shows the steps of transfer of the carcass tube supported by the apparatus of Figure 1 with respect of the shaping drum of Figure 3;

Figures 5 and 6 show the steps of centering and blocking the carcass tube on the shaping drum.

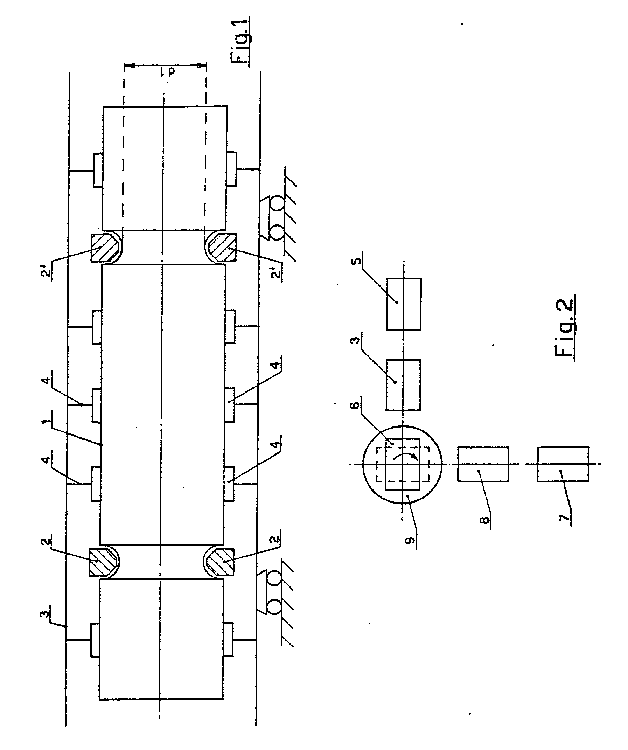

Figure 1 shows a carcass 1 for a radial tire comprising one or more reinforcing plies, strips and the sidewalls of the tire.

For the sake of simplicity in this figure the assembly of the various mentioned components has been represented with a single layer.

In proximity of the carcass ends, namely at a predetermined distance from said ends, two bead cores 2, 2' of any desired shape are already arranged, i.e. two bead cores having circular or polygonal sections, for example hexagonal section as shown in the figures. In the drawing, still for the sake of simplicity, elastomeric fillers eventually present in some cases have been omitted. The carcass 1 is represented in the configuration of a cylindrical tube with the plies faithfully shaped around the bases and the lateral sides of the bead cores 2, 2'.

Hereinafter the term "tube" means a cylindrical configuration different from the usual one of a carcass already arranged around a first step drum in which the ends of the plies are turned up around the bead cores. In fact, as shown in Figure 1, the ends of the plies are still straight and therefore the term "tube" intends to define here a cylindrical carcass whose plies are not turned up at the ends, but remain axially projecting outwardly beyond the bead cores.

The shaping of the plies around the bead cores 2, 2' has been effected with a rigid collapsible first step drum, whose characteristics are not shown and described in detail since they do not constitute an object of the present invention. The carcass tube is supported by a suitable apparatus comprising means for removing the carcass 1 from the cited collapsible drum.

The means for removing the tube are of known type, and they comprise magnetic means for carcasses comprising metallic plies or mechanical means for any other type of carcass, for example with jaws acting on the opposite sides of the bead cores or also with suction means acting on the opposite sides of the elastomeric fillers when provided around the bead cores.

Only by way of example Figure 1 shows a transfer apparatus 3 comprising as removing means a plurality of suction means 4 shown in action on the carcass. Clearly the elements 4 are equivalent to gripping means of different types.

Here there is described a process for manufacturing a pneumatic tire comprising a radial carcass already arranged in the form of a tube on the apparatus 3 and an annular assembly formed by an annular reinforcing annular structure and a tread made separately (not shown). The annular reinforcing structure can be formed for example by two layers of metallic cords crossing with one another, for example with angles from 0° to 90°.

The apparatus for performing the process for manufacturing the pneumatic tires is schematically shown in the block diagram of Figure 2 and comprises a collapsible rigid first step drum 5, the transfer apparatus 3, a shaping drum 6, an auxiliary drum 7 for making separately the reinforcing structure and a tread, and a ring 8 for transferring said assembly from the auxiliary drum 7 to the shaping drum 6.

The shaping drum 6 constitutes an essential element of the invention and in the particular embodiment shown in Figure 2 said drum 6 is placed on a frame mounted on a platform rotating around a vertical axis so that the shaft of the drum 6, which is mounted on the cited frame in cantilever fashion and parallel to the ground, on rotating of the platform 9 can become aligned first with the axis of the carcass tube arranged on the transfer apparatus 3 and then with the axis of the transfer ring 8.

The auxiliary drum 7 and the ring 8 have their axis aligned and constitute a part of the state of the art according to various possible known structures. Therefore, these devices will not be described, but only mentioned where necessary.

In the preferred embodiment of the apparatus the angle between the common axis of drum 7 and ring 8 and the axis of the carcass tube arranged on the apparatus 3 can vary between 75° and 120°, in a horizontal plane parallel to the ground.

However, the drum 7 and the ring 8 could be arranged, for example, also at 180° with respect to the apparatus 3 and the drum 5. In particular, according to the example shown in Figure 2, said angle is conveniently 90°; this arrangement can very advantageously permit the use in a small space of an already existing line related to the devices 7 and 8 with a drum 6 of new conception as that of the present invention.

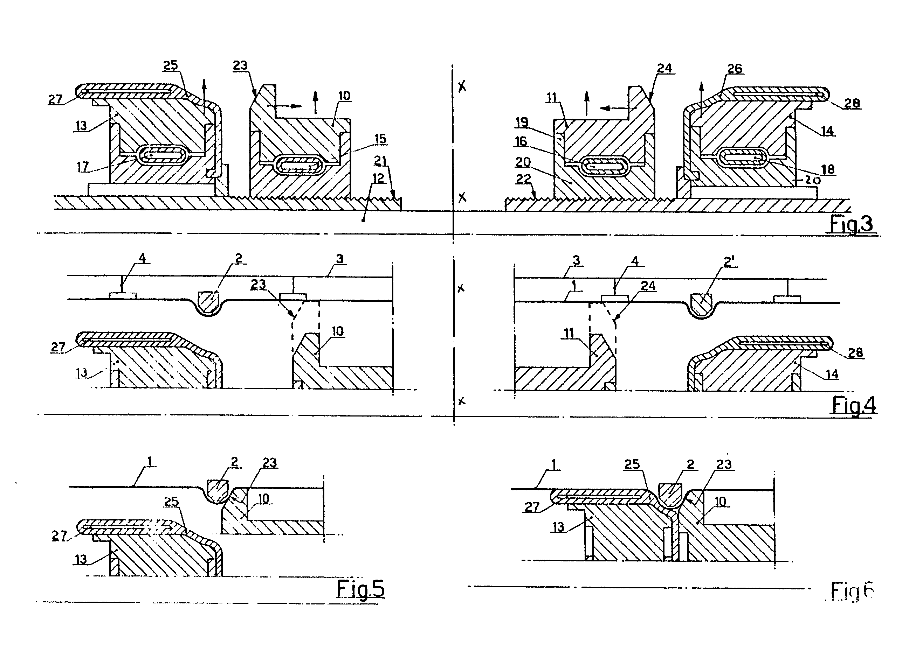

The drum 6 in the most general embodiment (Figure 3) comprises a first pair of two groups of sectors 10, 11 applied around a shaft 12 symmetrically with respect to the central plane X—X, and a second pair of two further groups of sectors 13, 14 always applied around the shaft 12, but in axially outer position with respect to the first pair.

Both the two cited pairs of sectors 10, 11 and 13, 14 are radially movable starting from a cylindrical configuration whose diameter is smaller than the smallest inner diameter $d_1$ (Figure 1) of the carcass tube 1 up to a value at which the sectors contact the inner walls of the carcass tube.

The two groups of sectors 10, 11 are movable the one with respect to the other in the axial direction of the drum 6 for approaching or separating movements with respect of the sectors 13, 14 of the second pair.

In particular the association of the sectors 10 to the sectors 13 and of the sectors 11 to the sectors 14 originates the blocking means for the bead cores, and the profiles of these sectors in the radially outer portion are therefore made so as to follow and to tighten as faithfully as possible the carcass plies already shaped around the sides and the base of the bead cores 2, 2'. The sectors are preferably realized with a material having low friction coefficient in contact with the elastomeric material, for example with stainless steel.

The means for the radial movements of said sectors and for the axial movements of the sectors 10, 11 of the first pair with respect of those of the second pair can be of any type easy to find out in the known documentation relating to the movement of parts of a drum or other apparatus for manufacturing pneumatic tires.

In synthesis here it is briefly cited that the radial movements could be effected with fluid-dynamic devices comprising stems acting along the shaft of the drum suitable to transmit the horizontal thrust to a layer system or to any mechanism whatsoever able on its turn to transform this horizontal thrust into a vertical thrust on the sectors.

Alternatively, the radial movement of the sectors could be obtained with horizontal and vertical racks or also moving with a piston along the shaft, a cam whose inclined surface moves on its turn a wheel integral with a sector.

In order to synthetically understand all the possible solutions of radial movement of the sectors it has been preferred to show simply in Figure 3 a group of deformable elastic bags, respectively 15 and 16 for the sectors 10, 11 of the first pair, and 17, 18 for the sectors 13, 14 of the second pair.

As understandable, the inflation or the deflation of the cited bags permits the radial movement of the various pluralities of sectors for example along suitable guides 19 provided radially on sleeves 20 forming the supports of the sectors around the shaft 12.

The means for the axial movements of the sectors 10, 11 of the first pair can also be of any known type, for example of fluid-dynamic or of another type.

In particular, in Figure 3 said possible means for the axial movement are exemplified by two opposite threads 21, 22 on two sleeves rotatably coupled together so that rotation thereof in a certain sense causes relative approaching or separation between the two groups of sectors 10, 11. The means for the rotation of the cited threads 21, 22 can be obtained in any way whatsoever, for example with the meshing of particular gears (not shown).

Preferably, as shown in the embodiment of Figure 3, the sectors 10, 11 comprise surfaces 23, 24 corresponding to a lateral portion of the bead cores 2, 2', while the sectors 13, 14 comprise surfaces 25, 26 apt to support the base and the axially outermost side of the cores 2, 2'.

In a further preferred embodiment, the surface of the sectors 13, 14 corresponding to said portions of the cores 2, 2' is covered with a layer of expandable elastomeric material.

Further the apparatus comprises means for turning up the ends of the plies around the bead cores 2, 2'. Said means can be realized in various manners, for example with turning up rollers introduced in the parabolic space formed by the ends of the plies moved away from the drum in rotation by centrifugal effect.

Preferably the turning up means are associated to the sectors 13, 14 and can comprise small expandable chambers 27, 28 associated at one end to the supporting sleeves of the sectors as clearly visible in Figure 3.

Further, the drum 6 comprises means for axial movement of the sectors 10 and 13 approached to each other with regard to the sectors 11 and 14 approached to each other too.

Said means, used in the step of torically shaping the carcass 1, comprise for example two fluid-dynamic devices whose stems are set in action in opposite senses along the shaft 12. In the embodiment of Figure 3 each stem is in the form of a cylindrical sleeve supporting the two groups of sectors 10, 13 and 11, 14.

Also, in a further embodiment the supports of the sectors 13 and 14 are idle assembled on the sleeves comprising the threads 21 and 22. It is possible to provide further means in order not to pull into rotation the sectors 11, 14 and 13, 10 when the sleeves on which the threads 21 and 22 are obtained, rotate.

In an embodiment said means could be formed by pins which are projected through the thrust of a stem from parts connected to fixed frames to be axially directed into suitable conduits passing through the supports of the sectors 11, 14 or 13, 10.

Now it is explained the manufacturing of a pneumatic tire accomplished with the apparatus of Figure 2 with the following steps:

— first it is made a carcass tube 1 around the rigid first step drum 5, shaping the plies around the sides of the bead cores 2, 2', for example by expanding the reinforcing ply comprised between the bead cores 2, 2', as far as to a position comprised between 30% and 90% and preferably between 50% and 70% of the maximum transversal dimension of the bead core 2 measured in an axial plane of the carcass 1;

— then the transfer apparatus 3 is placed around the first step drum 5, whereafter the suction means 4 are applied to the carcass 1 and lastly the first step drum 5 is collapsed;

— subsequently the carcass tube 1 is transferred toward the shaping drum 6, which is already arranged in a position of maximum radial contraction and with the sectors 10 and 11 arranged in the position of maximum axial contraction; during this step very advantageously the carcass tube 1 is introduced by telescoping in a very short time all around the drum 6.

— In a further step the groups of the sectors 10 and 11 are expanded against the inner walls of the carcass tube 1 as indicated with dashed line in Figure 4; during this step the expansion of the sectors 10, 11 overcomes the elastic resistance of eventual circumferential springs (not shown) which kept the sectors 10, 11 in the position of radial contraction;

— immediately thereafter, the same group of sectors 10, 11 begins to slide along the inner walls of the carcass tube 1 with an axial movement of mutual separation of the sectors 10 and 11; the axial movement of the sectors 10 and 11 terminates when the axially outer surfaces 23 and 24 advance into close contact with the carcass plies wound on the axially inner sides of the bead cores 2 and 2' (Figure 5). During this step the transfer apparatus 3 has already been moved away from the drum 6 since the carcass tube 1 is supported by the radial forces transmitted against the inner walls of the carcass tube 1 itself by the sectors 10, 11.

The step for axially moving the sectors 10 and 11 toward the sectors 13 and 14 is essential for obtaining a subsequent optimum toric configuration of the carcass 1.

In fact, for various reasons the planes locating the two bead cores 2, 2' could not be perfectly perpendicular with respect to the axis of the carcass tube 1.

For example, in a plane axial to the carcass tube 1, the transversal sections of the bead cores 2, 2' placed in a lower position with respect to the axis of the carcass tube 1 could be nearer each other than the upper transversal sections of the same bead cores 2, 2' and practically, the planes of the two bead cores 2, 2' would result convergent with each other toward the lower part.

Under such conditions, the subsequent toric shaping would originate as understandable, a carcass having an unacceptable shape.

The process of the invention avoids advantageously the persisting of the cited drawback.

In fact, the axial movement of the sectors 10 and 11 causes the mutual separation of the two lower sections of the two bead cores 2, 2' moving gradually the deformed portion of the plies on the sides of the bead cores 2, 2' in two axially outermost positions with respect to the previous ones as when the planes locating the position of the bead cores are perfectly perpendicular to the axis of the carcass tube. Therefore the subsequent toric configuration of the carcass 1 is perfectly regular both in the upper part and in the lower part of the axis of rotation.

Lastly, in a further step the sectors 13 and 14 are expanded advancing the respective surfaces 25, 26 against the corresponding portions of carcass plies shaped around the bead cores 2, 2' (Figure 6); at the end of this step it is consequently determined the formation of the bead seats and the carcass tube 1 is firmly fixed to the drum 6.

In the further steps, the further components of the pneumatic tire, i.e. the annular reinforcing structure and the tread, are transported around the shaping drum 6.

These further steps take place also advantageously thoroughly automatically.

In fact the annular reinforcing structure and the tread already formed on the auxiliary drum 7, are removed from said drum 7 by means of the transfer ring 8, with steps which are not repeated here for sake of simplicity since they can be found in the specific documentation of this subject matter.

Subsequently the ring 8, moved always in the direction of the axis of the drum 7, transfers the reinforcing structure and the tread around the drum 6 already rotated by the platform 9 in the position in which the axes of the drums 7 and 6 are coincident.

Subsequently, with already known steps there is provided the toric shaping of the carcass, drawing toward each other along the shaft 12 the sleeve-shaped stems of the two purposely provided fluid-dynamic devices and sending air under pressure into the closed space determined by the carcass 1 and by the elastic continuous portions of the end of the small chambers 27, 28 clamped between the sectors approached to each other in order to form the two bead seats.

The invention has the advantage of avoiding any type of sliding of the carcass plies around the bead cores 2, 2' in the steps of shaping into toric configuration the carcass 1. In fact, the plies have already been deformed around the bead cores 2, 2' before transferring the carcass 1 on the drum 6 and the connection between the plies and the bead cores 2, 2' is kept perfect for the fact that the groups of sectors 10, 13 and 11, 14 are pushed into pressure the one toward the other through means apt to determine the axial movements of the sectors 10, 11 along the shaft 12 in the loading and centering steps of the carcass tube 1.

Consequently, there is determined very favourably a strong action of blocking the carcass plies, which are clamped between the continuous surface of the bead cores 2 and 2' and the surfaces of the sectors forming the respective bead seats.

This result could not be completely reached with the characteristics of the drum of the state of the art. In fact, in the known drums the bead seats are already pre-constituted and if the plies are too rigid, as a consequence, they will tend not to follow faithfully the profile of the bead seats originating slidings during the shaping step. Here, according to the present invention the carcass plies have already been deformed so as to follow faithfully the sides of the bead cores 2, 2' and the desired geometry is not at all altered during the transfer of the carcass tube 1 from the first step drum 5 to the shaping drum 6 since the characteristics of said drum permit a completely automatic loading of the carcass tube 1 without mechanical interferences of any type.

The drum 6 further allows to form the bead seats in different steps and with subsequent mutual approach of the constituting sectors so as not only to receive perfectly the bead cores 2, 2' with the portions of the plies wound on their respective sides, but also so as to exert on said portions of the plies axial and opposite forces whose intensity can be regulated by the more or less forced screwing of the sectors 10 and 11, by the threads 21, 22, against the corresponding sectors 13 and 14.

The drum 6 for the toric shaping of the carcass tube can make part of a plant different from that shown in Figure 2, in particular for example of a plant in which the annular reinforcing structure and the tread are fed directly to the drum 6.

Moreover, during the toric shaping of the carcass it can be thought to associate to the drum 6 suitable pushing means or like elements apt to favour the turn-up of the ends of the plies.

**Claims**

1. Process for manufacturing pneumatic tires, comprising a carcass (1) formed by one or more reinforcing plies, a pair of bead cores (2, 2'), a tread and an annular reinforcing structure between the carcass and the tread, said process including the steps of:

a) building-up carcass plies, in cylindrical configuration, around a first drum (5);

b) applying bead cores (2, 2') onto said plies, at a predetermined distance from the ends thereof, and arranging a portion of the plies around the inside of said bead cores (2, 2') but maintaining their ends projecting axially outwardly beyond the bead cores (2, 2') so as to form a carcass tube;

c) transferring by telescoping said carcass tube around a second drum (6), which is devoid of a bladder, and which comprises a first (10, 11) and second (13, 14) group of radially expandable and axially movable parts prearranged with an outer diameter that is smaller than the smallest inner diameter of said carcass tube, these first (10, 11) and second (13, 14) groups of expandable and axially movable parts forming bead supporting seats;

d) centering said carcass tube onto said second drum (6) by applying direct forces in a radial sense from the tube inside toward the outside through the simultaneous expansion of said first expandable parts (10, 11) arranged symmetrically and in a central position with respect to the mid-circumferential plane perpendicular to the axis of the second drum (6) and pressing continuously inwardly the carcass tube by applying radial and stretching forces to the inner surface of the carcass tube in moving axially and continuously said first expandable parts (10, 11) always in contact with the carcass walls from the central position to a position in which the plies are clamped between the axially innermost sides of the bead cores (2, 2') and said first expandable parts (10, 11);

e) bearing the ends of said carcass tube by applying radially directed forces to the tube from the inside towards the outside of the tube, through the simultaneous expansion of said second expandable parts (13, 14) of said second drum (6);

f) blocking the bead cores (2, 2') onto said seats by clamping the ply portions wound around the side of the bead cores (2, 2') with the first (10, 11) and second (13, 14) groups of expandable and axially movable parts generating axial forces opposing one another;

g) torically shaping said carcass tube through inwardly directed axial movement of said bead supporting seats, and

h) completing the carcass (1) with the annular reinforcing structure and the tread.

2. Process as in claim 1, characterized by forming separately on an auxiliary drum (7) an assembly formed by the annular reinforcing structure and the tread and of transferring said assembly around the carcass (1) after having effected a rotation of the second drum (6) from a position in which the carcass tube is aligned with the axis of the first drum (5) to a position in which the carcass tube is aligned with the auxiliary drum (7).

3. Drum for toric shaping of a tire carcass (1), arranged in the form of a cylindrical tube and comprising plies wound on both sides of a pair of bead cores (2, 2'), with their ends axially projecting outwardly beyond the cores, said drum comprising:

a shaft (12), along which are axially slidable and radially expandable a pair of bead supporting seats symmetrically arranged one to the other with respect to the central plane perpendicular to the axis of rotation of the drum, each seat being comprised by sectors applied around the shaft, said seats being radially movable starting from a cylindrical configuration determined by a diameter of a value lower than the smallest inner diameter of the carcass tube, said drum being characterized in that each of said bead supporting seats comprises two groups (10, 11, 13, 14) of sectors, all said sectors being operatively grouped in a first pair (10, 11) of sectors and in a second pair (13, 14) of sectors, the groups of sectors of the first pair being axially movable one with respect to the other and with respect to the groups of the second pair, the groups of sectors of said second pair being applied around the shaft (12) in an axial outer position with respect to the first pair (10, 11), the contiguous groups of sectors of the two pairs in consequence of their radial expansion against the wall of said tube and the axial approach of the sectors of the first pair towards the sectors of the second pair determining blocking means for the carcass plies in wound configuration around the sides of the bead cores (2, 2'), said blocking means being axially movable to each other.

4. Drum as in claim 3, characterized by the fact that at least a portion of the radially outermost surface of the sectors (13, 14) of the second group in the position of maximum expansion corresponds to the base surface of the bead cores (2, 2').

5. Drum as in claim 4, characterized by the fact of comprising a continuous elastomeric material arranged around said portion of sectors of the second pair.

6. Drum as in claims 3 to 5, characterized by the fact of comprising means (27, 28) for turning-up the ends of the plies, said means being arranged on the sectors (13, 14) of said second pair.

7. Drum as in claims 3 to 6, characterized by the fact of comprising a shaft mounted in cantilever fashion on a platform rotating around a vertical axis.

**Patentansprüche**

1. Verfahren zum Herstellen von Luftreifen, die eine Karkasse (1), welche aus einer oder mehreren Verstärkungslagen gebildet ist, ein Paar von Wulstkernen (2, 2'), einen Laufstreifen und ein ringförmiges Verstärkungsgebilde zwischen der Karkasse und dem Laufstreifen aufweisen, wobei das Verfahren folgende Schritte umfaßt:

a) Aufbauen von Karkassenlagen in zylindrischer Gestalt rund um eine erste Trommel (5);

b) Auflegen von Wulstkernen (2, 2') auf die Lagen in einem vorbestimmten Abstand von deren Enden, und Herumlegen eines Teils der Lagen um die Innenseite der Wulstkerne (2, 2'), wobei jedoch ihre Enden axial auswärts über die Wulstkerne (2, 2') vorragend gehalten werden, derart, daß ein Karkassenschlauch gebildet wird;

c) Überführen des Karkassenschlauches durch teleskopische Bewegung rund um eine zweite Trommel (6), die keinen Luftsack aufweist, jedoch eine erste (10, 11) und eine zweite (13, 14) Gruppe von radial ausdehnbaren und axial bewegbaren Teilen aufweist, die zuvor angeordnet sind mit einem Außendurchmesser, der kleiner als der kleinste Innendurchmesser des Karkassenschlauches ist, wobei diese erste (10, 11) und zweite (13, 14) Gruppe aus ausdehnbaren und axial bewegbaren Teilen Wulstabstützsitze bilden;

d) Zentrieren des Karkassenschlauches auf der zweiten Trommel (6) durch Anlegen von direkten Kräften in einem radialen Sinn von der Innenseite des Schlauches in Richtung gegen die Außenseite über gleichzeitiges Ausdehnen der ersten ausdehnbaren Teile (10, 11), die symmetrisch und und in einer mittleren Position mit Bezug auf die mittlere Umfangsebene rechtwinklig zur Achse der zweiten Trommel (6) angeordnet sind, und kontinuierliches Einwärtsdrücken des Karkassenschlauches durch Anlegen radialer Kräfte und Spannkräfte an die innere Fläche des Karkassenschlauches durch axiales und kontinuierliches Bewegen der ersten ausdehnbaren Teile (10, 11) in dauernder Berührung mit den Karkassenwänden von der mittleren Position zu einer Position, in welcher die Lagen zwischen den axial innerersten Seiten der Wulstkerne (2, 2') und den ersten ausdehnbaren Teilen (10, 11) eingeklemmt sind;

e) Abstützen der Enden des Karkassenschlauches durch Anlegen radial gerichteter Kräfte an den Schlauch von der Innenseite in Richtung gegen die Außenseite des Schlauches über gleichzeitige Ausdehnung der zweiten ausdehnbaren Teile (13, 14) der zweiten Teile Trommel (6);

f) Festlegen der Wulstkerne (2, 2') auf den Sitzen durch Festklemmen der Lagenteile, die rund um die Seite der Wulstkerne (2, 2') gelegt sind mit der ersten (10, 11) und der zweiten (13, 14) Gruppe aus ausdehnbaren und axial bewegbaren Teilen, so daß einander entgegengesetzte axiale Kräfte erzeugt werden;

g) torisches Gestalten (Bombieren) des Karkassenschlauches über einwärts gerichtete axiale Bewegung der Wulstabstützsitze, und

h) Vervollständigen der Karkasse (1) mit dem ringförmigen Verstärkungsgebilde und dem Laufstreifen.

2. Verfahren nach Anspruch 1, dadurch gekennzeichnet, daß an einer Hilfstrommel (7) getrennt ein Gebilde gebildet wird, welches aus dem ringförmigen Verstärkungsgebilde und dem Laufstreifen gebildet ist, und daß das Gebilde in eine Position rund um die Karkasse (1) überführt wird, nachdem Drehung der zweiten Trommel (6) aus einer Position, in welcher der Karkassenschlauch mit der Achse der ersten Trommel (5) ausgerichtet ist, in eine Position ausgeführt worden ist, in welcher der Karkassenschlauch mit der Hilfstrommel (7) ausgerichtet ist.

3. Trommel zum torischen Gestalten (Bombieren) einer Reifenkarkasse (1), die in Form eines zylindrischen Schlauches vorgesehen ist und Lagen aufweist, die auf beiden Seiten eines Paares von Wulstkernen (2, 2') gewickelt oder gelegt sind, wobei ihre Enden axial auswärts über die Kerne vorragen, und wobei die Trommel folgendes umfaßt:

einen Schaft (12), entlang von welchem ein Paar von Wulstabstützsitzen axial verschiebbar und radial ausdehnbar und symmetrisch zueinander mit Bezug auf die mittlere Ebene rechtwinklig zur Drehachse der Trommel angeordnet ist, jeder Sitz durch Segmente gebildet ist, die rund um den Schaft angeordnet sind, die Sitze radial bewegbar sind, ausgehend von einer zylindrischen Konfiguration, die durch einen Durchmesser bestimmt ist, der kleiner als der kleinste Innendurchmesser des Karkassenschlauches ist, wobei die Trommel dadurch gekennzeichnet ist, daß jeder der Wulstabstützsitze zwei Gruppen (10, 11, 13, 14) von Segmenten aufweist, alle Segmente arbeitsmäßig gruppiert sind in einem ersten Paar (10, 11) von Segmenten und in einem zweiten Paar (13, 14) von Segmenten, die Gruppen von Segmenten des ersten Paares mit Bezug aufeinander und mit Bezug auf die Gruppen des zweiten Paares axial bewegbar sind, die Gruppen von Segmenten des zweiten Paares rund um den Schaft (12) in einer axial äußeren Stellung mit Bezug auf das erste Paar (10, 11) angeordnet sind, die angrenzenden Gruppen von Segmenten der beiden Paare als Folge ihrer radialen Ausdehnung gegen die Wand des Schlauches und der axialen Annäherung der Segmente des ersten Paares in Richtung gegen die Segmente des zweiten Paares Blockierungsmittel für die Karkassenlagen bilden, die rund um die Seiten der Wulstkerne (2, 2') gewickelt sind, wobei die Blockierungsmittel zueinander axial bewegbar sind.

4. Trommel nach Anspruch 3, dadurch gekennzeichnet, daß wenigstens ein Teil der radial äußeren Fläche der Segmente (13, 14) der zweiten Gruppe in der Position maximaler Ausdehnung der Basisfläche der Wulstkerne (2, 2') entspricht.

5. Trommel nach Anspruch 4, dadurch gekennzeichnet, daß kontinuierliches elastomeres Material vorgesehen ist, welches rund um den genannten Teil von Segmenten des zweiten Paares angeordnet ist.

6. Trommel nach den Ansprüchen 3 bis 5, dadurch gekennzeichnet, daß eine Einrichtung (27, 28) vorgesehen ist zum Umlegen der Enden der Lagen und daß diese Einrichtung an den Segementen (13, 14) des zweiten Paares angeordnet ist.

7. Trommel nach den Ansprüchen 3 bis 6, dadurch gekennzeichnet, daß sie einen Schaft aufweist, der frei vorragend an einer Plattform angebracht ist, die sich um eine vertikale Achse dreht.

**Revendications**

1. Procédé de fabrication de pneumatiques, comprenant une carcasse (1) formée par un ou plusieurs plis de renforcement, deux tringles de talons (2, 2'), une bande de roulement et une structure annulaire de renforcement entre la carcasse et la bande de roulement, ledit procédé comprenant les étapes consistant à:

a) mettre en place des plis de carcasse, avec une configuration cylindrique autour d'un premier tambour (5);

b) placer des tringles de talons (2, 2') sur lesdits plis, à une distance prédéterminée de leurs extrémités, et disposer une partie des plis autour du côté intérieur des tringles de talons (2, 2') mais en maintenant leurs extrémités de façon qu'elles dépassent axialement vers l'extérieur lesdites tringles de talons (2, 2') afin de former un tube de carcasse;

c) transférer de façon télescopique le tube de carcasse autour d'un second tambour (6), qui est dépourvu de vessie, et qui comprend un premier (10, 11) et un second (13, 14) groupe de parties radialement expansibles et axialement mobiles qui sont pré-agencés avec un diamètre extérieur qui est plus petit que le diamètre intérieur minimal dudit tube de carcasse, lesdits premier (10, 11) et second (13, 14) groupes de parties radialement expansibles et axialement mobiles formant des sièges de support de talon;

d) centrer ledit tube de carcasse sur ledit second tambour (6) par application directe de forces dans un sens radial depuis le tube vers l'intérieur en direction de l'extérieur avec expansion simultanée desdites premières parties expansibles (10, 11) disposées symétriquement et dans une position centrale par rapport au plan circonférenciel médian perpendiculaire à l'axe du second tambour (6) et pousser de façon continue vers l'intérieur ledit tube de carcasse par application de forces radiales et d'allongement à la surface intérieure du tube de carcasse en déplaçant axialement et de façon continue lesdites premières parties expansibles (10, 11), toujours en contact avec les parois de la carcasse depuis la position centrale jusque dans une position dans laquelle les plis sont bloqués entre les côtés, situés axialement le plus à l'intérieur, des tringles de talons (2, 2') et lesdites premières parties expansibles (10, 11);

e) supporter les extrémités dudit tube de carcasse par application de forces, dirigées radialement, audit tube de carcasse, de l'intérieur vers l'extérieur de la carcasse, avec expansion simultanée desdites secondes parties expansibles (13, 14) dudit second tambour (6);

f) bloquer lesdites tringles de talons (2, 2') sur lesdits sièges par serrage des parties de plis enroulées autour du côté des tringles de talons (2, 2'), avec génération par lesdits premier (10, 11) et second (13, 14) groupes de parties radialement expensibles et axialement mobiles de forces axiales mutuellement en opposition;

g) donner un profil torique au tube de carcasse par un mouvement axial, dirigé vers l'intérieur, desdits sièges de support de talons, et

h) terminer la carcasse (1) avec la structure annulaire de renforcement et la bande de roulement.

2. Procédé selon la revendication 1, caractérisé en ce qu'on forme séparément sur un tambour auxiliaire (7) un ensemble formé par la structure de renforcement annulaire et la bande d'enroulement et on transfère ledit ensemble autour de la carcasse (1) après avoir fait tourner le second tambour (6) depuis une position dans laquelle le tube de carcasse est aligné avec l'axe du premier tambour (5) jusque dans une position dans laquelle le tube de carcasse est aligné avec le tambour auxiliaire (7).

3. Tambour pour un profilage torique d'une carcasse de pneumatique (1), agencée sous la forme d'un tube cylindrique et comprenant des plis enroulés sur les deux côtés d'une paire de tringles de talons (2, 2'), de telle sorte que leurs extrémités fassent saillie axialement vers l'extérieur au delà desdites tringles, ledit tambour comprenant:

— un arbre (12) le long duquel peuvent se déplacer par glissement axial et expansion radiale une paire de sièges de support de talons disposés symétriquement l'un par rapport à l'autre de part et d'autre du plan central perpendiculaire à l'axe de rotation du tambour, chaque siège étant constitué par des secteurs mis en place autour de l'arbre, lesdits sièges étant mobiles radialement à partir d'un configuration cylindrique déterminée par un diamètre d'une valeur inférieure au diamètre intérieur minimal du tube de carcasse, ledit tambour étant caractérisé en ce que chacun des sièges de support de talons comprend deux groupes (10, 11, 13, 14) de secteurs, tous les secteurs précités étant groupés fonctionnellement sous la forme d'une première paire (10, 11) de secteurs et d'une seconde paire (13, 14) de secteurs, les groupes de secteurs de la première paire étant mobiles axialement l'un par rapport à l'autre et par rapport aux groupes de la seconde paire, les groupes de secteurs de ladite seconde paire étant mis en place autour de l'arbre (12) dans une position extérieure axiale par rapport à ladite première paire (10, 11), les groupes contigüs de secteurs des deux paires définissant, en conséquence de leur expansion radiale jusque contre la paroi de ladite carcasse tubulaire et du rapprochement axial des secteurs de la première paire en direction des secteurs de la seconde paire, des moyens de blocage pour les plies de carcasse dans une configuration d'enroulement autour des côtés des tringles de talons (2, 2'), lesdits moyens de blocage étant déplaçables axialement l'un par rapport à l'autre.

4. Tambour selon la revendication 3, caractérisé en ce qu'au moins une partie de la surface, située radialement le plus à l'extérieur, des secteurs (13, 14) du second group dans la position d'expansion maximale correspond à la surface de base des tringles de talons (2, 2').

5. Tambour selon la revendication 4, caractérisé en ce qu'il comprend une matière élastomère continue disposée autour de ladite partie des secteurs de la seconde paire.

6. Tambour selon une des revendications 3 à 5, caractérisé en ce qu'il comprend des moyens (27, 28) pour recourber vers le haut les extrémités des plis, lesdits moyens étant disposés sur les secteurs (13, 14) de ladite seconde paire.

7. Tambour selon une des revendications 3 à 6, caractérisé en ce qu'il comprend un arbre monté en porte-à-faux sur une plate-forme tournant autour d'un axe vertical.

Fig.1

Fig.2

0 090 416

Fig.3

Fig.4

Fig.5

Fig.6

0 090 416